Europäisches Patentamt

European Patent Office

Office européen des brevets

(11) Veröffentlichungsnummer: **0 245 829**
**A2**

(12) **EUROPÄISCHE PATENTANMELDUNG**

(21) Anmeldenummer: **87106829.2**

(51) Int. Cl.⁴: **B23Q 1/00**

(22) Anmeldetag: **12.05.87**

(30) Priorität: **12.05.86 DE 3615941**

(43) Veröffentlichungstag der Anmeldung:
**19.11.87 Patentblatt 87/47**

(84) Benannte Vertragsstaaten:
**AT BE CH DE ES FR GB GR IT LI LU NL SE**

(71) Anmelder: **Willberg, Hans-Heinrich**
**Malerwinkelweg 23**
**D-8201 Altofing/Bad Feilnbach(DE)**

(72) Erfinder: **Willberg, Hans-Heinrich**
**Malerwinkelweg 23**
**D-8201 Altofing/Bad Feilnbach(DE)**

(74) Vertreter: **Schmidt-Evers, Jürgen, Dipl.-Ing. et al**
**Patentanwälte Dipl.-Ing. H. Mitscherlich**
**Dipl.-Ing. K. Gunschmann Dipl.-Ing.**
**Dr.rer.nat. W. Körber Dipl.-Ing. J.**
**Schmidt-Evers Dipl.-Ing. W. Melzer**
**Steinsdorfstrasse 10**
**D-8000 München 22(DE)**

(54) **Gerät zum Prüfen von elektronischen Bauelementen, insbesondere IC's.**

(57) Bei einem Gerät (4) zum Prüfen von elektronischen Bauelementen, an dem eine Testvorrichtung (3) montierbar ist, wobei zur elektrischen Verbindung der vorhandenen elektrischen Leiter ein Verbindungsstecker und zur mechanischen Verbindung Kupplungen (64) mit jeweils einem starren und einem beweglichen Kupplungsglied (66, 67) vorgesehen sind, und wobei die Kupplungen (64) die Testvorrichtung (3) nach dem Prinzip der schiefen Ebene am Gerät (4) in einer zentrierten Position festlegen, soll eine stabile Ankopplung der Testvorrichtung (3) am Gerät (4) möglich sein. Dies wird dadurch erreicht, daß wenigstens drei auf der zugehörigen Befestigungsseite (63) sternförmig verteilte Kupplungen (64) angeordnet sind.

FIG. 1

## Gerät zum Prüfen von elektronischen Bauelementen, insbesondere IC's

Die Erfindung bezieht sich auf ein Gerät zum Prüfen von elektronischen Bauelementen nach dem Oberbegriff des Anspruchs l.

Ein Gerät dieser Art ist in der europäischen Patentanmeldung 0 l02 2l7 beschrieben und dargestellt, vgl. insbesondere Fig. 5B und 5C.

Bei der bekannten Ausgestaltung sind zur Festlegung der Testvorrichtung an der es aufnehmenden Anschlußseite des Gerätes zwei Kupplungen vorgesehen, die auf halber Höhe der Testvorrichtung, d.h. rechts und links von der etwa mittig angeordneten Steckverbindung angeordnet sind. Die beweglichen Kupplungsteile sind an der Testvorrichtung angeordnet und werden durch um senkrecht zur Anschlußseite gerichtete Achsen drehbare Zylinder mit gewindeförmigen Umfangsnuten gebildet. In die Umfangsnuten fassen die am Gerät angeordneten starren Kupplungsglieder ein, die durch Zapfen gebildet sind. Die Ankopplung erfolgt durch Drehen der Zylinder um die vorgenannten Achsen, wobei die Testvorrichtung aufgrund der im Prinzip von schiefen Ebenen angeordneten Umfangsnuten gegen die Anschlußseite des Gerätes gepreßt wird. Die Zylinder sind mit einem in der Nähe des Umfangs der Testvorrichtung verlaufenden endlosen Seilzug miteinander verbunden, an der ein gemeinsamer Antriebsmotor zum Drehen der Zylinder angreift.

Die bekannte Ausgestaltung ergibt eine verhältnismäßig labile Ankopplung der Testvorrichtung, weil die vorhandenen Anlageflächen (vgl. Fig. 5C), die durch die Stirnflächen von Zentrierstiften aufnehmenden Ansätzen gebildet sind, verhältnismäßig klein sind. Eine Vergrößerung der Anlageflächen würde zwangsläufig zu einer Vergrößerung des Bauaufwandes führen.

Der Erfindung liegt die Aufgabe zugrunde, ein Gerät der eingangs bezeichneten Gattung so auszugestalten, daß eine stabile Ankopplung der Testvorrichtung am Gerät möglich ist.

Diese Aufgabe wird durch die im Kennzeichen des Anspruchs l enthaltenen Merkmale gelöst.

Bei der erfindungsgemäßen Ausgestaltung sind wenigstens drei auf der zugehörigen Befestigungsseite sternförmig verteilte Kupplungen angeordnet, die eine stabile Ankupplung ergeben, weil sternförmig verteilten Stützpunkten die Wirksamkeit einer entsprechend großen Stütz-bzw. Anlagefläche zukommt. Dabei können die einzelnen Anlageflächen an den Kupplungen verhältnismäßig klein bemessen werden, so daß die Kupplungen raumsparend und kostengünstig ausgeführt werden können. Die Möglichkeit des Kippens der Testvorrichtung um eine gedachte horizontale, die Steckverbindung schneidende Linie ist im Gegensatz zur bekannten Ausgestaltung bei der erfindungsgemäßen Ausgestaltung nicht möglich.

Die Ausgestaltung nach Anspruch 2 ermöglicht sowohl einfache Führungen als auch einen einfachen Antrieb für die beweglichen Kupplungselemente.

Zu einer Vereinfachung tragen auch die Merkmale der Ansprüche 3 und 4 bei, weil bei diesen Lösungen die Bauteile komplizierterer Form am Gerät angeordnet sind, an dem sie sich einfacher und leichter ausbilden lassen, weil es sich bei der Testvorrichtung um ein erheblich empfindlicheres Teil handelt.

Die Ausbildungen nach den Ansprüchen 5 und 6 sind deshalb vorteilhaft, weil das Eigengewicht der Testvorrichtung zur Ankopplung bzw. Anpressung der Testvorrichtung an das Gerät ausgenutzt werden kann. Die Ausgestaltungen nach den Ansprüchen 7 bis 9 tragen ebenfalls zu einer einfachen Bauweise bei, wobei bezüglich der Ausgestaltung nach Anspruch 8 zu bemerken ist, daß bei der Anordnung von vier Kupplungen die Führung der betreffenden beweglichen Kupplungsteile und deren Antrieb bedeutend einfacher ausgestaltet werden kann.

Zu einer einfachen Bauweise tragen auch unter ergonomischen Gesichtspunkten die Merkmale der Ansprüche l0 und ll bei.

Nachfolgend wird die Erfindung anhand eines in Zeichnungen dargestellten bevorzugten Ausführungsbeispiels erläutert. Es zeigt:

Fig. l eine erfindungsgemäß ausgestaltete Vorrichtung zum kraftarmen Handhaben und möglichst genauen Positionieren eines Testcomputers an einem Gerät zum Prüfen von elektronischen Bauelementen in der Seitenansicht;

Fig. 2 die Vorrichtung in der Draufsicht;

Fig. 3 den Schnitt III-III in Fig. 2.

Die in Fig. l allgemein mit l bezeichnete Vorrichtung dient dazu, einen von einem Tragrahmen 2 der Vorrichtung l getragenen, allgemein mit 3 bezeichneten Testcomputer zwecks dessen Festlegung an einem Gerät 4 zum Prüfen von elektronischen Bauelementen so zu handhaben und zu positionieren, daß die vorhandenen mechanischen und elektrischen Verbindungselemente ineinandergreifen.

Die Vorrichtung besteht aus einem allgemein mit 5 bezeichneten Ständer mit einem Führungsrohr 6, dem am unteren Ende radial auskragende Stützfüße 7 zugeordnet sind, und in dem eine Säule 8 höhenverstellbar (s. Doppelpfeil 9) gelagert ist. Die jeweilige Verstellposition der Säule 8 ist durch einen am Führungsrohr 6 angeordneten Klemmhebel l2 feststellbar. In das Führungsrohr 6 ist eine sog. Luftfeder mit Druckausgleich (nicht dargestellt) aneordnet, die eine Höheneinstellung mit geringem Kraftaufwand ermöglicht.

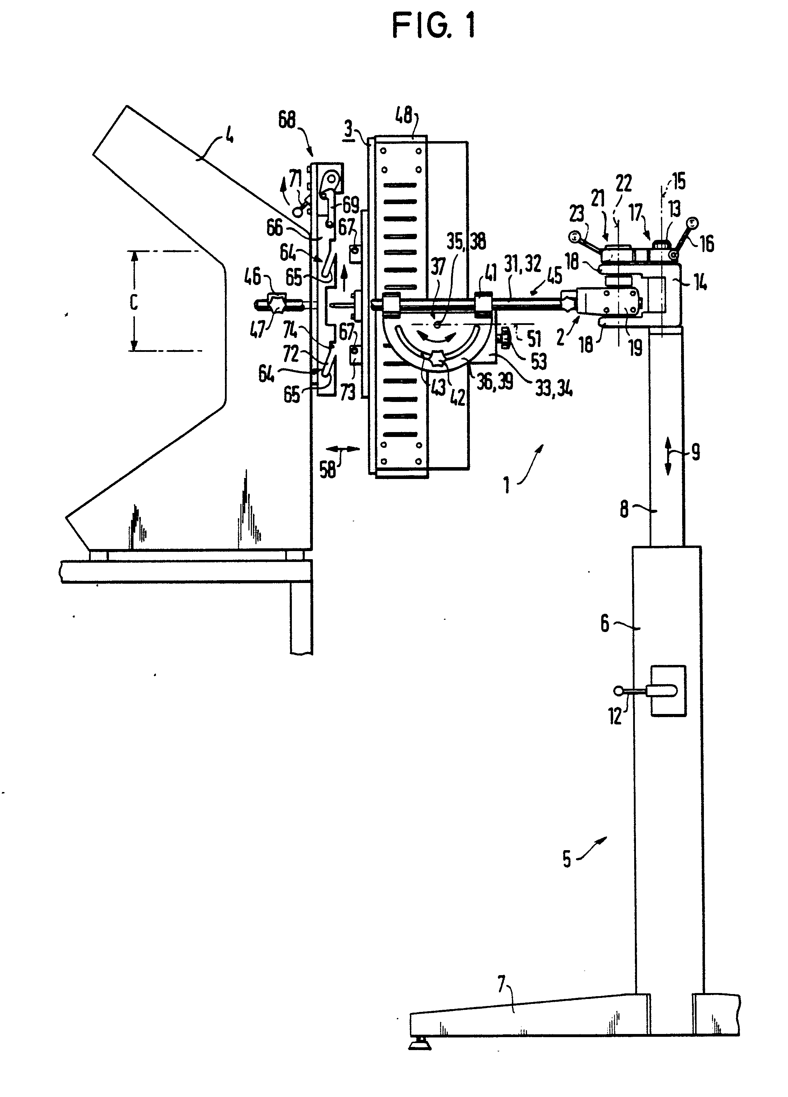

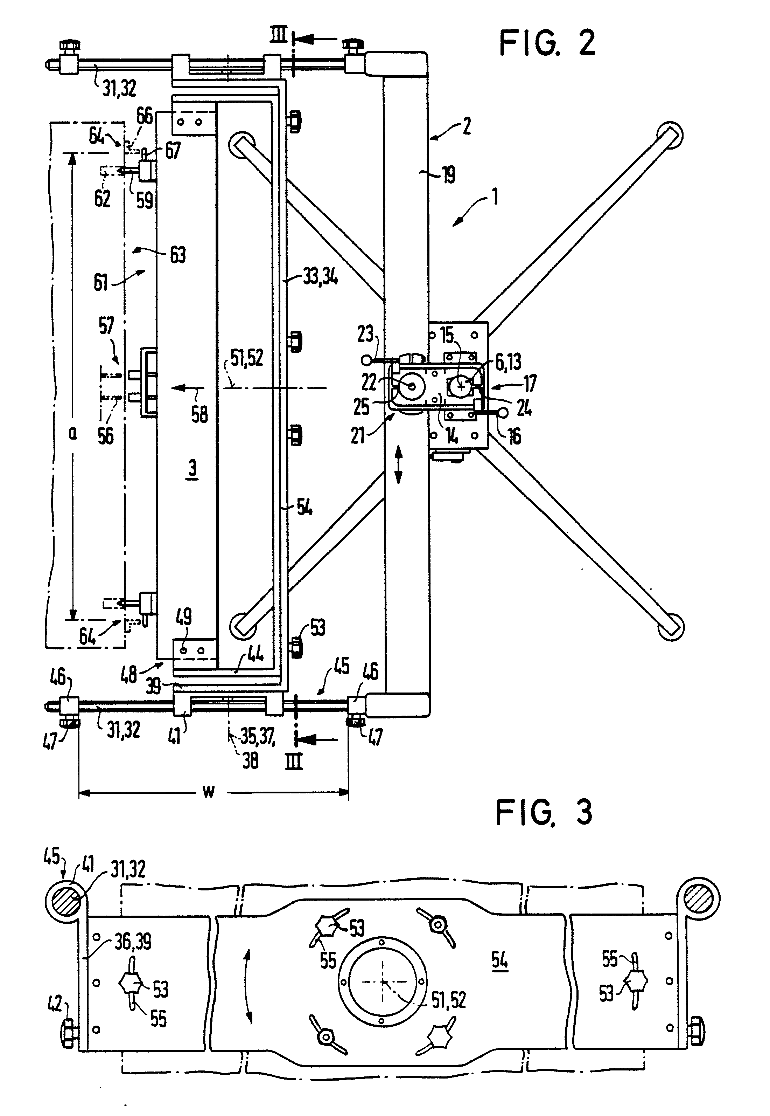

Am oberen Ende der Säule 8 ist auf einem das freie Ende der Säule 8 darstellenden Zapfen l3 ein Schwenkkopf l4 um eine vertikale erste Achse l5, nämlich die Mittelachse der Säule 8 bzw. des Führungsrohrs 6 schwenkbar und in der jeweiligen Schwenkstellung durch einen am Schwenkkopf l4 angeordneten Klemmhebel l6 feststellbar gelagert. Es ist auch möglich, die Säule 8 um die erste Achse l5 drehbar im Führungsrohr 6 zu lagern, wodurch das erste, die erste Achse l5 enthaltende Gelenk l7 zwischen dem Schwenkkopf und der Säule 8 entfallen könnte. Der Schwenkkopf l4 ist in der Seitenansicht gesehen U-förmig ausgebildet mit zwei horizontalen Schenkeln l8, die den Steg l9 des Tragrahmens 2 übergreifen und mit dem Steg l9 ein zweites Gelenk 2l mit einer vertikalen Achse 22 bilden, in dem der Tragrahmen 2 horizontal - schwenkbar und der jeweiligen Schwenkstellung durch einen am Schwenkkopf l4 angeordneten Klemmhebel 23 feststellbar ist. Das Klemmen wird durch in Fig. 2 dargestellte Sclitze 24, 25 im Schwenkkopf l4 ermöglicht.

Der Tragrahmen 2 besteht aus dem Steg l9 und von seinen freien Enden zum Gerät 4 hin weisenden Tragarmen 3l, die durch in Aufnahmen des Stegs l9 befestigten Rundstangen 32 gebildet sind. Zwischen den Tragarmen 3l erstreckt sich eine allgemein mit 33 bezeichnete Traverse, die durch einen zum Gerät 4 hin offenen U-förmigen Rahmen 34 aus hochkant angeordnetem Flachmaterial besteht, der um eine horizontale, quer zu den Tragarmen 3l gerichtete zweite Achse 35 - schwenkbar und der in der jeweiligen Schwenkposition festellbar an Führungsstücken 36 gelagert ist, die auf den Tragarmen 3l verschiebbar gelagert sind. Das die zweite Achse 35 enthaltende zweite Gelenk ist mit 37 bezeichnet. Der betreffende Gelenkbolzen 38 ist in Fig. l und 2 ersichtlich. Die Führungsstücke 36 werden jeweils durch eine senkrecht angeordnete, unterseitig gerundete Platte 39 gebildet, auf deren Außenseite voneinander beabstandete Führungsaugen 4l befestigt sind, die auf die Rundstangen 32 aufgesteckt sind. Zur Feststellung des Rahmens 34 in der jeweiligen Schwenkstellung sind Klemmschrauben 42 vorgesehen, die die Platten 39 in um die Gelenkbolzen 38 kreisbogenförmig gekrümmten Nuten 43 durchfassen und in die Schenkel 44 des Rahmens 34 z.B. mit einem Gewinde einfassen. Zur Begrenzung des Verschiebeweges w in der allgemein mit 45 bezeichneten Längsführung sind auf den Rundstangen 32 Klemmringe 46 mit Klemmschrauben 47 angeordnet.

Der Rahmen 34 übergreift mit seinen Schenkeln 44 einen zweiten, zum Gerät 4 hin offenen kastenförmigen Rahmen 48, in dem der Testcomputer 3 aufgenommen ist und durch andeutungsweise dargestellte Befestigungsschrauben oder Klemmittel 49 fixiert sein kann. Der zweite Rahmen 48 ist gegenüber dem ersten Rahmen 34 um eine horizontale dritte Achse 5l schwenkbar gelagert. Hierzu dient ein die dritte Achse enthaltendes, im einzelnen nicht dargestelltes drittes Gelenk 52, das in der Mitte zwischen den symmetrisch angeordneten Tragarmen 3l angeordnet ist. Auch der zweite Tragrahmen 48 ist in seiner jeweiligen Schwenkposition feststellbar und zwar durch Klemmschrauben 53, die den Steg 54 des ersten Tragrahmens 34 in um die dritte Achse 5l gekrümmten Nuten 55 durchfassen und in den dritten Tragrahmen 48 z.B. mit einem Gewinde einfassen.

Die Vorrichtung l ermöglicht folgende Freiheitsgrade des Testcomputers 3 gegenüber den Gerät 4, die die Positionierung des Testcomputers 3 am Gerät 4 ermöglichen:

Höhenverstellung im Ständer 5.

Seitenverstellung durch Schwenken um die vertikale erste Achse l5 und/oder die vertikale vierte Achse 22.

Kippen um die horizontale zweite Achse 35.

Verdrehen um die horizontale dritte Achse 5l.

Längsverschiebung in der Längsführung 45 bzw. auf den Tragarmen 32.

Bei dem Gerät 4 zum Prüfen handelt es sich um ein solches, bei dem die zu prüfenden elektronischen Bauelemente in einem nicht dargestellten Führungskanal einer Teststation zugeführt und dann wieder abgeführt werden, in der eine elektrische Verbindung zwischen den Kontakten des jeweiligen elektronischen Bauelements und geräteseitigen Steckkontakten hergestellt werden, die am geräteseitigen Teil 56 eines die elektrische Verbindung mit dem Testcomputer 3 herstellenden Verbindungssteckers 57 ausgebildet sind. Die Steckrichtung (Pfeil 58) erstreckt sich horizontal, d.h. parallel zu den Tragarmen 3l. Zur Fixierung des Testcomputers 3 am Gerät dienen Zentrierelemente und wenigstens drei sternförmig um den Verbindungsstecker 57 angeordnete Spannkupplungen.

Es sind rechts und links des Verbindungssteckers 57 zwei Zentrierstifte 59 an der Anschlußseite 6l des Testcomputers 3 vorhanden, denen Zentierausnehmungen 62 an der Anschlußseite 63 des Gerätes 4 zugeordnet sind. Außerdem sind vier Spannkupplungen 64 mit jeweils einem starren Kupplungselement und einem verstellbaren Kupplungselement angeordnet. Die verstellbaren Kupplungselemente werden durch Schrägflächen 65 an verstellbaren Schiebern 66 gebildet, die an der Anschlußseite 63 des Gerätes 4 verschiebbar geführt sind. An der Anschlußseite 61 des Testcomputers 3 sind ortsfeste Kupplungszapfen 67 angeordnet, die durch die Positionierung des Testcomputers 3 u.a. durch Verschieben in eine Position bringbar sind, in der sie von den Schrägflächen 65 der Schieber 66 hintergriffen werden. Es sind zwei vertikal bewegliche und in einem horizontalen Abstand a voneinander angeordnete, durch Leisten gebildete Schieber 66 vorgesehen, die durch einen am oberen Ende der Anschlußseite 63 angeordneten Kurbeltrieb 68 mit einer horizontal angeordneten Kurbelwelle sowie an den Schiebern 66 angelenkten Pleuelstangen 69 und einem Verstellhebel 71 verstellbar sind.

Die Schrägflächen 65 werden durch schräge Nuten 72 in den Schiebern 66 gebildet. Die Nuten 72 bzw. die Schrägflächen 65 verlaufen vorzugsweise schräg abwärts zum Gerät 4 hin, so daß das Eigengewicht des Testcomputers 3 die von den Schrägflächen 65 hervorgerufene Spannwirkung unterstützt. Der senkrechte Abstand der vorhandenen vier Spannkupplungen 64, die sternförmig um den Verbindungsstecker 57 angeordnet sind, ist in Fig. I mit c bezeichnet. Die Kupplungszapfen 67 erstrecken sich parallel zur Anschlußseite 61 und quer zu den vertikalen Schiebern 66 und sie sind von Sockelstücken 73 getragen.

Im Bereich der Öffnung der Nuten 72 sind letztere durch Ausnehmung 74 erweitert, die ein Einführung der Kupplungszapfen 67 in die Nuten 72 erleichtern.

Vor dem Positionieren des Testcomputers 3 am Gerät 4 wird dieser unter Ausnutzung der Freiheitsgrade an der Vorrichtung I so ausgerichtet, daß die Steckerteile des Verbindungssteckers 57 bzw. die Zentrierelemente 59, 62 koaxial zueinander stehen. Dann wird der Testcomputer mit den Tragrahmen 34 und 48 in der Längsführung 45 so weit vorgeschoben, daß die Kupplungszapfen 67 über den Schrägflächen 65 stehen, wobei die vertikalen Wände der Ausnehmungen 74 als Anschläge dienen können. Dann werden die Schieber 66 durch Betätigung des Kurbeltriebes 68 hochgeschoben, wodurch die Ankupplung unter Spannung an die Anschlußseite 63 des Gerätes 4 automatisch erfolgt. Der Testcomputer 3 wird daßei automatisch in der Längsführung 45 vorgezogen. Zum Lösen des Testcomputers bedarf es lediglich einer Lösung der Spannkupplungen 64, wobei der Testcomputer 3 aufgrund der schrägen Nuten 72 automatisch wenigestens teilweise aus seiner Steckverbindung (Zentrierelemente 59, 62, Verbindungsstecker 62) geschoben wird.

## Ansprüche

I. Gerät zum Prüfen von elektronischen Bauelementen, insbesondere IC's, an dem eine Testvorrichtung, insbesondere ein Testcomputer, montierbar ist, wobei zur elektrischen Verbindung der vorhandenen elektrischen Leiter ein Verbindungsstecker und zur mechanischen Verbindung Kupplungen mit jeweils einem starren und einem beweglichen Kupplungsglied vorgesehen sind, und wobei die Kupplungen die Testvorrichtung nach dem Prinzip der - schiefen Ebene am Gerät in einer zentrierten Position festlegen,
dadurch gekennzeichnet,
daß wenigstens drei auf der zugehörigen Befestigungsseite (63) sternförmig verteilte Kupplungen (64) angeordnet sind.

2. Gerät nach Anspruch I,
dadurch gekennzeichnet,
daß die beweglichen Kupplungsglieder (66) linear beweglich sind.

3. Gerät nach Anspruch I oder 2,
dadurch gekennzeichnet,
daß die beweglichen Kupplungsglieder (66) am Gerät (4) angeordnet sind.

4. Gerät nach einem der Ansprüche I bis 3,
dadurch gekennzeichnet,
daß die schiefen Ebenen (Schrägflächen 65) geräteseitig angeordnet sind.

5. Gerät nach einem der Ansprüche I bis 4,
dadurch gekennzeichnet,
daß die beweglichen Kupplungsglieder (66) vertikal beweglich sind.

6. Gerät nach Anspruch 5,
dadurch gekennzeichnet,
daß die Neigung der schiefen Ebenen schräg abwärts zum Gerät (4) hin verläuft.

7. Gerät nach einem der Ansprüche I bis 6,
dadurch gekennzeichnet,
daß die schiefen Ebenen durch sich gerade erstreckenden Schrägflächen (65) gebildet sind.

8. Gerät nach einem der Ansprüche I bis 7,
dadurch gekennzeichnet,
daß vier Kupplungen (64) vorhanden sind, die die Eckpunkte eines gedachten, vorzugsweise regelmäßigen Vierecks bilden.

9 Gerät nach einem der Ansprüche 2 bis 8,
dadurch gekennzeichnet,
daß die beweglichen Kupplungsteile durch zwei in einem Abstand voneinander angeordnete verschiebbare Leisten (66) gebildet sind.

I0. Gerät nach einem der Ansprüche I bis 9,
dadurch gekennzeichnet,
daß die beweglichen Kupplungsteile durch einen Kurbeltrieb (68) bewegbar sind.

11. Gerät nach Anspruch 10,
dadurch gekennzeichnet,
daß der Kurbeltrieb (68) im oberen Bereich der Anschlußseite (63) angeordnet sind.

0 245 829

FIG. 1

FIG. 2

FIG. 3